# EUROPÄISCHE PATENTSCHRIFT

(11) **EP 3 126 120 B1**
(45) Veröffentlichungstag und Bekanntmachung des Hinweises auf die Patenterteilung: **15.05.2019**
(21) Anmeldenummer: 15718757.6
(22) Anmeldetag: 31.03.2015
(51) Int. Cl.: B29C 65/08, D04G 1/00, B31B 70/60, B31B 160/10

(54) **VERFAHREN UND VORRICHTUNG ZUR HERSTELLUNG VON SÄCKEN AUS EINEM GEWEBESCHLAUCH**
METHOD AND APPARATUS FOR PRODUCING BAGS FROM A WOVEN-FABRIC TUBE
PROCÉDÉ ET DISPOSITIF POUR RÉALISER DES SACS À PARTIR D'UN TUBE DE TISSU

(30) Priorität: 03.04.2014 AT 2502014
(43) Veröffentlichungstag der Anmeldung: 08.02.2017
(73) Patentinhaber: LOHIA CORP LIMITED, Kanpur, Uttar Pradesh 208022 (IN)
(72) Erfinder: WORFF, Herwig, 4810 Gmunden (AT)
(74) Vertreter: Keschmann, Marc
(86) Internationale Anmeldenummer: PCT/AT2015/000050
(87) Internationale Veröffentlichungsnummer: WO 2015/149090

(56) Entgegenhaltungen:
- WO-A1-2012/106742
- US-A- 4 373 979
- US-A- 4 473 432
- US-A- 5 766 391

## Beschreibung

Die Erfindung betrifft ein Verfahren zur Herstellung von Säcken aus einem Gewebeschlauch, bei dem der flache Gewebeschlauch aus einer Schlauchabwickelvorrichtung oder einer Schlauchbildungsvorrichtung einer Schneideinrichtung zugeführt wird, in welcher der Gewebeschlauch entlang einer Schneidlinie abgelängt wird, um schlauchförmige, beidseitig offene Sackkörper zu erhalten, wobei das Ablängen des Gewebeschlauchs in einem Längstransportabschnitt erfolgt, in dem der Gewebeschlauch bzw. die schlauchförmigen Sackkörper in Längsrichtung des Gewebeschlauches transportiert werden.

Die Erfindung betrifft weiters eine Vorrichtung zur Durchführung dieses Verfahrens.

Der schlauchförmige Körper eines Sackes wird üblicherweise aus einem schlauchartigen Rundmaterial oder einem an den Längsrändern zu einem Schlauch verbundenen Flachmaterial gebildet. Eine grobe Einteilung solcher Säcke wird durch die Unterscheidung in Kissen- und Kastenform getroffen. Eine Kissenform von Säcken entsteht üblicherweise durch Konfektionierung der Böden mit einer Textilnaht oder einer Schweißnaht.

Das Gewebe besteht dabei bevorzugt aus monoaxial verstreckten Polymer-, insbesondere Polyolefin- oder Polypropylenbändchen. Diese Bändchen werden durch Streckung von Polymer-, insbesondere Polyolefin- oder Polypropylenfolien üblicherweise auf das vier- bis zehnfache hergestellt, wodurch die Molekülketten in Bändchenlängsrichtung ausgerichtet werden und in diese Richtungen ca. die sechs- bis zehnfache Festigkeit gegenüber der ursprünglichen Folie aufweisen. Die Bändchenbreite beträgt üblicherweise ca. 1,5 bis 10 mm, die Dicke 20 bis 80 µm.

Ein Verfahren und eine Vorrichtung der eingangs genannten Art sind zum Beispiel aus der WO 2010/086232 A1 bekannt. Eine solche Vorrichtung umfasst in der Regel zunächst eine Schlauchbildungsvorrichtung zur Herstellung und Bereitstellung eines schlauchförmigen Materials. Es kann auch lediglich eine Schlauchabwickelvorrichtung vorhanden sein. Diese ist in der Regel mit einem Materialwickel bestückbar, auf welchen schlauchförmiges Material gewickelt ist. Von diesem Materialwickel wird das Material meist kontinuierlich in Längsrichtung abgezogen. Beim Sackherstellungsprozess nach den Maschinen des Standes der Technik wird der durch die Schlauchbildungsvorrichtung oder der durch die Schlauchabwickelvorrichtung bereitgestellte Gewebeschlauch einer Querschneideeinrichtung zugeführt, die den Gewebeschlauch in einzelne Schlauchstücke bzw. schlauchförmige Sackkörper vereinzelt. Die schlauchförmigen Sackkörper werden einer Transporteinrichtung übergeben. Mithilfe dieser Transporteinrichtung werden die schlauchförmigen Sackkörper zu einer Station befördert, in der wenigstens ein offenes Ende der Schlauchstücke verschlossen wird. Das Verschließen erfolgt beispielsweise durch Anbringen einer Naht in Querrichtung des Sacks. Alternativ kann eine Bodenfaltung erfolgen, um einen rechteckigen Boden zu erhalten.

Das Dokument US 4373979 A offenbart ein Verfahren zum Schließen von Säcken, bei dem die Säcke geschweißt werden.

An den durch das Ablängverfahren entstehenden Rändern an den Öffnungsenden der Säcke besteht jedoch insbesondere bei Säcken aus unbeschichtetem Gewebe die Gefahr der Bändchenablösung. Die parallel zur Schneidlinie verlaufenden, randnahen Bändchen verschieben sich dabei in Richtung zur Schneidlinie oder verlieren ihre Parallelität und können in der Folge auch gänzlich aus dem Gewebe herausrutschen. Diese Erscheinungen sind für das Befüllen und das weitere Handling der Säcke von großem Nachteil.

Aus diesem Grund werden die Öffnungsenden der Säcke üblicherweise manuell umgeschlagen und der umgeschlagene Rand mit der darunter liegenden Gewebelage verbunden, z.B. vernäht oder verklebt, wodurch eine Art Saum und damit eine sauber abgeschlossene Kante an den Öffnungsenden der Säcke erhalten wird.

Nachteilig hierbei ist jedoch, dass dieser Arbeitsvorgang des Umschlagens und Verbindens einen hohen Aufwand an Arbeit und Material (Nähgarn) erfordert sowie einen gewissen Materialverlust des Sackmaterials durch das Umschlagverfahren bedingt.

Die vorliegende Erfindung zielt daher darauf ab, die oben genannten Nachteile zu vermeiden. Insbesondere zielt die Erfindung darauf ab, die Herstellung eines Sackes zu automatisieren, sowie den bei der Herstellung entstehenden Materialverlust und die Herstellungskosten zu minimieren.

Zur Lösung dieser Aufgabe sieht die Erfindung bei einem Verfahren der eingangs genannten Art vor, dass ein Schneidlinienbereich des Gewebes an wenigstens einem offenen Ende der schlauchförmigen Sackkörper vor dem Verschließen dieses offenen Endes durch Wärmeeinbringung behandelt wird. Der Schneidlinienbereich eines Sackkörpers ist eine streifenförmige Fläche, die sich ausgehend von der Schneidlinie in Längsrichtung des Sackes und bevorzugt im Wesentlichen über den gesamten Umfang des Gewebeschlauches erstreckt. Ein Schneidlinienbereich befindet sich dabei auf der einen Seite der Schneidlinie, d.h. am Rand des einen der beiden durch das Ablängen erzeugten schlauchförmigen Sackkörper, und ein weiterer Schneidlinienbereich befindet sich auf der anderen Seite der Schneidlinie, d.h. am Rand des anderen der beiden durch das Ablängen erzeugten schlauchförmigen Sackkörper. Im Rahmen der Erfindung können beide Schneidlinienbereiche durch Wärmeeinbringung behandelt werden oder auch nur einer der beiden Schneidlinienbereiche. Bevorzugt wird so vorgegangen, dass der an demjenigen Rand des schlauchförmigen Sackkörpers liegende Schneidlinienbereich behandelt wird, der in der Folge das offene, der Befüllung dienende Ende des Sackes bildet.

Bevorzugt ist vorgesehen, dass die Wärmeeinbringung im Längstransportabschnitt erfolgt.

Die Wärmeeinbringung führt dazu, dass die Gewebebändchen innerhalb des Schneidlinienbereiches erhitzt werden und sich einander kreuzende Gewebebändchen der jeweiligen Gewebelage demzufolge miteinander verbinden, sodass die oben beschriebene Bändchenablösung wirksam verhindert wird. Die Wärmebehandlung ist so auszulegen, dass die Gewebebändchen zumindest soweit erweicht werden, dass sie sich miteinander verbinden. Die Wärmeeinbringung wird dabei so durchgeführt, dass sich lediglich die einander kreuzenden Gewebebändchen der jeweiligen Gewebelage miteinander verbinden, wobei durch geeignete Maßnahmen verhindert wird, dass sich die aufeinanderliegenden Gewebelagen auf Grund der Wärmeeinbringung miteinander dauerhaft verbinden. Nach der Wärmebehandlung kühlt der behandelte Schneidlinienbereich wieder ab und die Bändchen verfestigen sich. Die Wärmeeinbringung wird hierbei nicht so durchgeführt, dass das jeweilige offene Ende des Sackes dadurch verschlossen wird. Vielmehr erfolgt das Verschließen des durch die erfindungsgemäße Wärmeeinbringung behandelten offenen Endes des Sackkörpers in einem nachfolgenden gesonderten Schritt.

Durch das erfindungsgemäße Verfahren wird die Bändchenablösung zumindest weitgehend verhindert, und es ist nicht notwendig, den nachteiligen Folgen einer Bändchenablösung durch andere Bearbeitungsschritte, wie z.B. ein Umschlagverfahren zu begegnen.

Eine bevorzugte Verfahrensweise sieht vor, dass die Wärmeeinbringung mithilfe eines Schweißvorganges erfolgt. Schweißen ist ein Verfahren nach dem Stand der Technik und insofern kostengünstig und einfach zu implementieren.

Besonders bevorzugt erfolgt der Schweißvorgang durch Ultraschallschweißen. Alternativ ist auch Heißkontaktschweißen denkbar.

Der Schweißvorgang erzeugt bevorzugt eine oder mehrere linienförmige Schweißfigur(en) oder eine Mehrzahl von punktförmigen Schweißfiguren auf dem Gewebeschlauch. Ziel hierbei ist es, den streifenförmigen Schneidlinienbereich möglichst über die ganze Breite des flachen Gewebeschlauchs durch die Wärmeeinbringung zu behandeln. Die Schweißlinie(n) muss (müssen) sich aber nicht unbedingt unterbrechungsfrei über die ganze Breite des flachen Gewebeschlauchs erstrecken, da hierbei die Gefahr einer Schwächung des Gewebematerials besteht. Bevorzugt erzeugt der Schweißvorgang im Schneidlinienbereich daher eine Mehrzahl von in Umfangsrichtung des Gewebeschlauchs voneinander beabstandeten Linien, Punkte oder Streifen.

Bevorzugt ist vorgesehen, dass der Schneidlinienbereich von der Schneidlinie weg gemessen eine Breite von mindestens 1 cm aufweist und sich im Wesentlichen über den gesamten Umfang des Gewebeschlauches erstreckt.

Besonders bevorzugt ist vorgesehen, dass der Schneidlinienbereich von der Schneidlinie ausgehend wenigstens 1 bis 3 zur Schneidlinie parallele und sich im Wesentlichen über den gesamten Umfang des Gewebeschlauches erstreckende Gewebebändchenreihen umfasst.

Eine bevorzugte Verfahrensweise sieht vor, dass die Wärmeeinbringung zeitlich vor oder nach dem Ablängen erfolgt. Hierbei wird beispielsweise zuerst der als Schneidlinienbereich vorgesehene Bereich durch Wärmeeinbringung behandelt und erst anschließend der Schneidvorgang durchgeführt. Bei einer derartigen Reihenfolge der Verfahrensschritte kann das Ablängen mittels Kaltschneiden, z.B. mit einem Messer erfolgen. Im umgekehrten Fall hingegen (zuerst Ablängen, dann Wärmeeinbringung) ist insbesondere bei unbeschichtetem Gewebe ein Heißschneiden bevorzugt.

Eine alternative Verfahrensweise sieht vor, dass die Wärmeeinbringung zeitgleich mit oder nach dem Ablängen erfolgt.

Unabhängig von der zeitlichen Reihenfolge des Ablängens und der Wärmeeinbringung in den Schneidlinienbereich erfolgen die Wärmeeinbringung in das Ablängen bevorzugt mittels voneinander verschiedener Einrichtungen. Insbesondere wird die Wärmeeinbringung während des Ablängens mittels eines heißen Messers nicht als erfindungsgemäße Wärmeeinbringung angesehen, weil die erfindungsgemäß zu erzielende Wirkung hierdurch nicht sichergestellt ist.

Weiters ist bevorzugt vorgesehen, dass die aufeinanderliegenden Gewebelagen des flachen Schlauchs gleichzeitig durch Wärmeeinbringung behandelt werden. Alternativ können die beiden Gewebelagen aber auch zeitlich hintereinander behandelt werden.

Unabhängig davon, ob die Behandlung der beiden aufeinanderliegenden Gewebelagen des flachen Schlauchs gleichzeitig oder hintereinander erfolgt, kann die Behandlung der beiden Gewebelagen durch Wärmeeinbringung an der gleichen Position oder an zwei verschiedenen Positionen erfolgen.

Bevorzugt ist vorgesehen, dass die aufeinanderliegenden Gewebelagen des flachen Schlauchs mit Hilfe von Trennmitteln, insbesondere einer Trennschicht, einer Trennlage oder eines innenliegenden Werkzeugs, voneinander beabstandet werden, um das Verbinden der aufeinanderliegenden Gewebelagen zu verhindern. Der Begriff innenliegend bedeutet hierbei, dass das Werkzeug im Inneren des Gewebeschlauchs angeordnet ist.

Als innenliegende, vorzugsweise stationäre Trennlage kann beispielsweise eine (Hart-)Metallplatte von vorzugsweise 0,3-2mm Stärke oder ein Edelstahlband oder dgl. Verwendung finden. Alternativ ist eine Folie (z.B. aus Polyamid oder Teflon) als Trennlage geeignet.

Im Falle der Wärmeeinbringung durch Ultraschallverschweißen kann die Trennlage eine doppelte Funktion erfüllen, nämlich einerseits das Verhindern eines Miteinanderverschweißens der beiden Gewebelagen und andererseits das Übertragen der von der Sonotrode der Ultraschallverschweißeinrichtung erzeugten Schwingungen, sodass die Bändchen sowohl innerhalb der oberen Bandgewebelage als auch innerhalb der unteren Bandgewebelage miteinander verschweißt werden. Auf diese Weise können beide Gewebelagen mit einer einzigen Ultraschallverschweißeinrichtung bearbeitet werden. Grundsätzlich kann die Ultraschallverschweißeinrichtung eine Sonotrode und einen Amboss aufweisen.

Alternativ kann die Trennlage als Gegenstück, d.h. Amboss für wenigstens eine Sonotrode verwendet werden. Bevorzugt ist hierbei vorgesehen, dass die Trennlage als Amboss ausgebildet ist, um mit einer außerhalb des Gewebeschlauchs angeordneten Sonotrode zur Wärmeeinbringung zusammenzuwirken. Dabei ist es auch möglich mit zwei Sonotroden (von oben und unten) zu arbeiten. Weiters ist es möglich, die Sonotrode und/oder den Amboss flach auszuführen und die für die Schweißfigur verantwortlichen Erhebungen auf der Zwischenlage (ein- oder beidseitig) vorzusehen.

Falls die Wärmeeinbringung mithilfe eines Schweißvorganges erfolgt, so ist bevorzugt vorgesehen, dass das Schweißen ohne Einbringen von zusätzlichem Material, bspw. Klebstoff durchgeführt wird.

Eine weitere bevorzugte Verfahrensweise sieht vor, dass die Schneidlinienbereiche einer Sacköffnung durch Wärmeeinbringung behandelt werden und die andere Sacköffnung beispielsweise durch Vernähen verschlossen wird.

Bei Säcken, die in deren Innerem eine Innenlage aus einer Polymer-, insbesondere Polyolefin- oder Polypropylenfolie erhalten sollen, sieht eine bevorzugte Verfahrensweise vor, dass die Folie vor dem Wärmeeinbringungsschritt im Inneren des Gewebeschlauchs positioniert wird und ein Rand der Folie mittels des Wärmeeinbringungsschritts im Schneidlinienbereich mit dem Gewebe verbunden wird.

Falls ein Sack mit Seitenfaltung hergestellt werden soll, ist bevorzugt vorgesehen, dass zuerst die Wärmeeinbringung durchgeführt wird, anschließend die Seitenfaltung hergestellt wird und abschließend das Ablängen erfolgt. Unter einer Seitenfaltung wird das Vorsehen von einer oder mehreren Falten an den Seiten des Sackes, also den in Längsrichtung der schlauchförmigen Sackkörper verlaufenden Kanten, verstanden, wodurch ein im Wesentlichen quaderförmiger Sack hergestellt werden kann.

Wie bereits erwähnt findet die Erfindung bevorzugt bei Säcken Anwendung, deren Gewebe aus monoaxial verstreckten Polymer-, insbesondere Polyolefin- oder Polypropylenbändchen besteht. Das Gewebe kann grundsätzlich beschichtet oder unbeschichtet sein. Die Vorteile der Erfindung kommen aber besonders bei unbeschichtetem Gewebe zum Tragen, da vor allem solche Gewebe zu einem Ausfransen neigen. Im Falle einer Beschichtung kann diese aus einer dünnen Schicht Polypropylen oder einer Mischung aus Polypropylen und Polyethylen bestehen.

Zur Lösung der der Erfindung zugrunde liegenden Aufgabe schlägt die Erfindung weiters eine Vorrichtung zur Herstellung von Säcken aus einem Gewebeschlauch vor, umfassend eine Schlauchabwickel- oder Schlauchbildungsvorrichtung, eine Schneideinrichtung, der ein flacher Gewebeschlauch aus der Schlauchabwickel- oder Schlauchbildungsvorrichtung in Schlauchlängsrichtung zuführbar ist und von der durch Ablängen des Gewebeschlauchs erhaltene schlauchförmige Sackkörper wegführbar sind, und eine Sackverschließeinrichtung zum Verschließen wenigstens eines offenen Endes der Sackkörper, wobei die Vorrichtung zumindest eine Wärmeeinbringungsvorrichtung zur Behandlung mindestens eines Schneidlinienbereichs der schlauchförmigen Sackkörper durch Wärmeeinbringung umfasst, wobei die Wärmeeinbringungseinrichtung in Transportrichtung vor der Sackverschließeinrichtung angeordnet ist.

Eine bevorzugte Weiterbildung sieht vor, dass der zumindest einen Wärmeeinbringungseinrichtung Trennmittel, insbesondere eine Trennschicht, eine Trennlage oder ein innenliegendes Werkzeug, zum Beabstanden der aufeinanderliegenden Gewebelagen des flachen Schlauchs zugeordnet ist.

Weiters ist es bevorzugt vorgesehen, dass die zumindest eine Wärmeeinbringungsvorrichtung als Schweißeinrichtung ausgebildet ist.

Eine bevorzugte Vorrichtung sieht vor, dass die Schweißeinrichtung eine Heißkontaktschweißeinrichtung ist, wobei das innenliegende Werkzeug als Gegenstück für zumindest einen Schweißstempel der Heißkontaktschweißeinrichtung ausgebildet ist.

Eine andere bevorzugte Ausbildung sieht vor, dass die Schweißeinrichtung eine Ultraschallschweißeinrichtung ist, wobei das innenliegende Trennmittel als Schwingungsübertragungsmittel ausgebildet ist.

Weiters ist bevorzugt vorgesehen, dass die Wärmeeinbringungseinrichtung als von der Schneideinrichtung gesonderte Einheit ausgebildet ist. Alternativ dazu kann vorgesehen sein, dass die zumindest eine Wärmeeinbringungseinrichtung und die Schneideinrichtung eine Einheit bilden.

In einer bevorzugten Ausbildung ist vorgesehen, dass die zumindest eine Wärmeeinbringungseinrichtung in Transportrichtung des Gewebeschlauchs vor der Schneideinrichtung angeordnet ist.

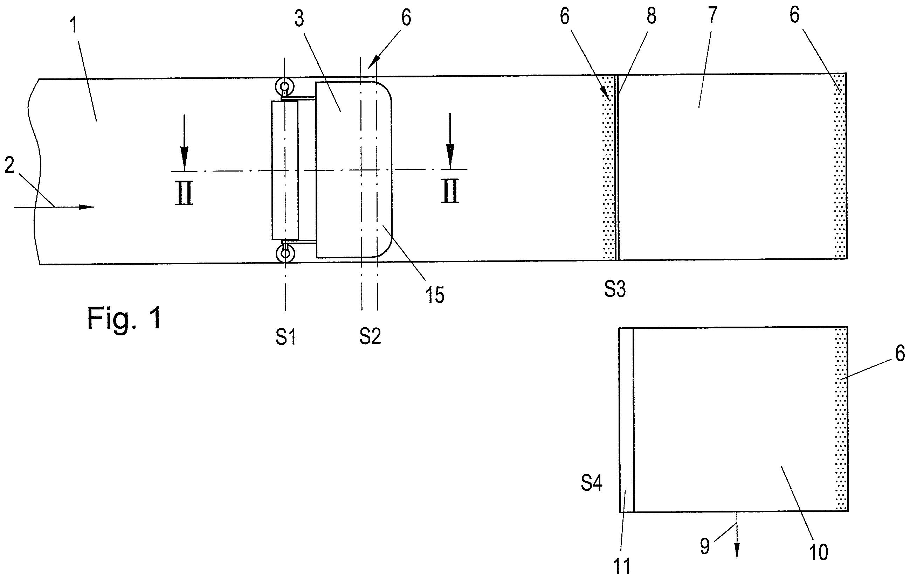

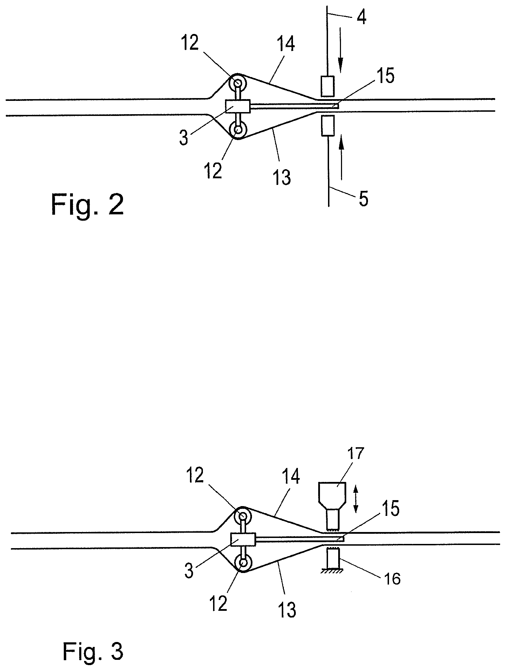

Die Erfindung wird nachfolgend anhand eines in der Zeichnung dargestellten Ausführungsbeispiels näher erläutert. In dieser zeigen Fig. 1 eine schematische Draufsicht auf die erfindungsgemäße Vorrichtung, Fig. 2 eine Schnittansicht entlang der Linie II-II der Fig. 1 und Fig. 3 eine alternative Ausbildung der Schweißeinrichtung.

In Fig. 1 ist ersichtlich, dass ein Gewebeschlauch 1 der Vorrichtung in Richtung des Pfeils 2 zugeführt und innerhalb der Vorrichtung ebenfalls in Richtung des Pfeils 2 transportiert wird. Im Schritt S1 werden die Gewebelagen des Gewebeschlauchs 1 mittels eines innenliegenden, d.h. zwischen den Gewebelagen des Gewebeschlauchs 1 angeordneten, Werkzeuges 3 beabstandet. In Schritt S2 werden die nunmehr voneinander beabstandeten Gewebelagen in einem mit 6 angedeuteten Schneidlinienbereich jeweils von einem obenliegenden Schweißstempel 4 und von einem untenliegenden Schweißstempel 5 einer Heißkontaktschweißeinrichtung erwärmt, sodass es zu einem Verschweißen der übereinander liegenden Gewebebändchen kommt. Beim Schweißvorgang verhindert das innenliegende Werkzeug 3 das Miteinanderverschweißen der beiden Gewebelagen des flachen Gewebeschlauchs. In Schritt S3 wird der Gewebeschlauch 1 nunmehr durch eine nicht dargestellte Schneidvorrichtung entlang der vorgesehenen Schneidlinie 8 abgelängt, um einen Sackkörper 7 zu erhalten.

In Schritt S4 werden die quer in Richtung des Pfeils 9 weitertransportierten Sackkörper 7 weiter verarbeitet, z.B. an einem Ende verschlossen. Mit 10 ist ein beispielhafter fertiger Sack bezeichnet, welcher auf der offenen Seite einen erfindungsgemäß wärmebehandelten Schneidlinienbereich 6 und auf der anderen Seite einen in herkömmlicher Weise verschlossenen Endbereich 11 aufweist.

In Fig. 1 sind die Schritte S2, S3 und S4 anhand von Schlauchabschnitten in unterschiedlichen Vorschubpositionen dargestellt. Der Vorschub des Gewebeschlauchs 1 bzw. der Sackkörper 7 in Richtung des Pfeils 2 bzw. 9 erfolgt dabei taktweise, wobei in den Pausen zwischen den einzelnen Vorschubtakten die Schritte S2 und S3 und ggf. S4 gleichzeitig vorgenommen werden. Während also in Schritt S2 ein Verschweißen erfolgt, wird ein bereits mit einem verschweißten Schneidlinienbereich 6 versehener und weitertransportierter Abschnitt des Schlauchgewebes in Schritt S3 zeitgleich abgelängt.

In der Schnittansicht gemäß Fig. 2 ist das innenliegende Werkzeug 3 besser ersichtlich. Das innenliegende Werkzeug 3 umfasst zwei Rollen 12, durch welche die beiden Gewebelagen 13 und 14 des Gewebeschlauches 1 voneinander beabstandet werden. Das innenliegende Werkzeug 3 umfasst weiters eine in Transportrichtung 2 an die Rollen 12 anschließende Platte 15, welche im Bereich der Wärmebehandlung als Gegenstück zu den Schweißstempeln 4 und 5 ausgebildet ist.

Die Schnittansicht gemäß Fig. 3 entspricht im Wesentlichen der Schnittansicht gemäß Fig. 2 mit dem Unterschied, dass nun eine Ultraschallverschweißeinrichtung zur Wärmeeinbringung vorgesehen ist. Die Ultraschallverschweißeinrichtung umfasst einen stationären Amboss 16 und eine Sonotrode 17. Dabei dient die Platte 15 des innenliegenden Werkzeugs 3 als Schwingungsüberträger, um die auf die obere Gewebelage 14 aufgebrachten Schwingungen auf die untere Gewebelage 13 zu übertragen, sodass sowohl die einander kreuzenden Bändchen der oberen Gewebelage 14 als auch die einander kreuzenden Bändchen der unteren Gewebelage 14 jeweils miteinander verbunden bzw. verschweißt werden.

## Patentansprüche

1. Verfahren zur Herstellung von Säcken (10) aus einem Gewebeschlauch (1), bei dem der flache Gewebeschlauch (1) aus einer Schlauchabwickelvorrichtung oder einer Schlauchbildungsvorrichtung einer Schneideinrichtung zugeführt wird, in welcher der Gewebeschlauch (1) entlang einer Schneidlinie (8) abgelängt wird, um schlauchförmige, beidseitig offene Sackkörper (7) zu erhalten, wobei das Ablängen des Gewebeschlauchs (1) in einem Längstransportschritt erfolgt, in dem der Gewebeschlauch (1) bzw. die schlauchförmigen Sackkörper (7) in Längsrichtung des Gewebeschlauches (1) transportiert werden, **dadurch gekennzeichnet, dass** ein Schneidlinienbereich (6) des Gewebes an wenigstens einem offenen Ende der schlauchförmigen Sackkörper (7) vor dem Verschließen dieses offenen Endes durch Wärmeeinbringung mithilfe eines Schweißvorganges behandelt wird, wobei der Schweißvorgang zeitlich vor dem Ablängen oder zeitgleich mit dem Ablängen erfolgt und so durchgeführt wird, dass sich lediglich die einander kreuzenden Gewebebändchen der jeweiligen Gewebelage (13,14) miteinander verbinden.

2. Verfahren nach Anspruch 1, **dadurch gekennzeichnet, dass** der Schweißvorgang durch Ultraschallverschweißung erfolgt.

3. Verfahren nach Anspruch 1 oder 2, **dadurch gekennzeichnet, dass** der Schweißvorgang eine oder mehrere linien- oder streifenförmige Schweißfigur(en) auf dem Gewebeschlauch (1) erzeugt.

4. Verfahren nach Anspruch 1 oder 2, **dadurch gekennzeichnet, dass** der Schweißvorgang eine Mehrzahl von punktförmigen Schweißfiguren auf dem Gewebeschlauch (1) erzeugt.

5. Verfahren nach einem der Ansprüche 1 bis 4, **dadurch gekennzeichnet, dass** der Schneidlinienbereich (6) von der Schneidlinie (8) weg gemessen eine Breite von mindestens 1 cm aufweist und sich bevorzugt im Wesentlichen über den gesamten Umfang des Gewebeschlauches (1) erstreckt.

6. Verfahren nach einem der Ansprüche 1 bis 5, **dadurch gekennzeichnet, dass** der Schneidlinienbereich (6) von der Schneidlinie (8) ausgehend wenigstens eine bis drei zur Schneidlinie (8) parallele und sich bevorzugt im Wesentlichen über den gesamten Umfang des Gewebeschlauches (1) erstreckende Gewebebändchenreihen umfasst.

7. Verfahren nach einem der Ansprüche 1 bis 6, **dadurch gekennzeichnet, dass** die aufeinanderliegenden Gewebelagen (13,14) des Gewebeschlauchs (1) gleichzeitig durch den Schweißvorgang behandelt werden.

8. Verfahren nach einem der Ansprüche 1 bis 7, **dadurch gekennzeichnet, dass** die aufeinanderliegenden Gewebelagen (13,14) des Gewebeschlauchs (1) mit Hilfe von Trennmitteln, insbesondere einer Trennschicht, einer Trennlage oder eines innenliegenden Werkzeugs (3), voneinander beabstandet werden, um das Verbinden der aufeinanderliegenden Gewebelagen (13,14) zu verhindern.

9. Verfahren nach einem der Ansprüche 1 bis 8, **dadurch gekennzeichnet, dass** der Schneidlinienbereich (6) einer Sacköffnung durch den Schweißvorgang behandelt wird und die andere Sacköffnung beispielsweise durch Vernähen verschlossen wird.

10. Verfahren nach einem der Ansprüche 1 bis 9, **dadurch gekennzeichnet, dass** das Gewebe aus monoaxial verstreckten Polymer-, insbesondere Polyolefin- oder Polypropylenbändchen besteht.

11. Verfahren nach einem der Anspruche 1 bis 10, **dadurch gekennzeichnet, dass** eine Folie vor dem Schweißvorgang im Inneren des Gewebeschlauchs (1) positioniert wird und ein Rand der Folie mittels des Schweißvorgangs im Schneidlinienbereich (6) mit dem Gewebe verbunden wird.

12. Verfahren nach einem der Ansprüche 1 bis 11, **dadurch gekennzeichnet, dass** das Ablängen nach dem Schweißvorgang und mittels Kaltschneiden erfolgt.

13. Vorrichtung zur Herstellung von Säcken (10) aus einem Gewebeschlauch (1), insbesondere zur Durchführung des Verfahrens nach einem der Ansprüche 1 bis 12, umfassend eine Schlauchabwickel- oder Schlauchbildungsvorrichtung, eine Schneideinrichtung, der ein flacher Gewebeschlauch (1) aus der Schlauchabwickel- oder Schlauchbildungsvorrichtung in Längsrichtung des Gewebeschlauchs (1) zuführbar ist und von der durch Ablängen des Gewebeschlauches (1) erhaltene schlauchförmige Sackkörper (7) wegführbar sind, und eine Sackverschließeinrichtung zum Verschließen wenigstens eines offenen Endes der Sackkörper (7), **dadurch gekennzeichnet, dass** die Vorrichtung zumindest eine Schweißeinrichtung zur Behandlung mindestens einer Schneidlinie (8) der schlauchförmigen Sackkörper (7) durch Wärmeeinbringung umfasst, wobei die Schweißeinrichtung vor der Sackverschließeinrichtung angeordnet ist, wobei die zumindest eine Schweißeinrichtung und die Schneideinrichtung eine Einheit bilden oder die zumindest eine Schweißeinrichtung in Transportrichtung des Gewebeschlauchs (1) vor der Schneideinrichtung angeordnet ist, und der zumindest einen Schweißeinrichtung Trennmittel, insbesondere eine Trennschicht, eine Trennlage oder ein innenliegendes Werkzeug (3), zum Beabstanden der aufeinanderliegenden Gewebelagen (13, 14) des Gewebeschlauchs (1) während des Schweißvorganges zugeordnet sind.

14. Vorrichtung nach Anspruch 13, **dadurch gekennzeichnet, dass** die zumindest eine Schweißeinrichtung als Ultraschallschweißeinrichtung ausgebildet ist.

15. Vorrichtung nach Anspruch 14, **dadurch gekennzeichnet, dass** das innenliegende Trennmittel als Schwingungsübertragungsmittel ausgebildet ist.

## Claims

1. A method for producing sacks (10) from a fabric tube (1), wherein the flat fabric tube (1) coming from a tube unwinding device or a tube forming device is fed to a cutting device in which the fabric tube (1) is cut along a cutting line (8) to obtain tubular sack bodies (7) that are open on both sides, wherein the cutting of the fabric tube (1) takes place in a longitudinal transport step, in which the fabric tube (1) or the tubular sack bodies (7) are transported in the longitudinal direction of the fabric tube (1), **characterized in that** a cutting line region (6) of the fabric is treated by heat input with the aid of a welding operation on at least one open end of the tubular sack bodies (7) prior to closing this open end, wherein the welding operation takes place before or simultaneously with the cutting to length and is carried out to only connect the crossing fabric tapes of the respective fabric layer (13,14) with each other.

2. A method according to claim 1, **characterized in that** the welding operation is carried out by ultrasonic welding.

3. A method according to claim 1 or 2, **characterized in that** the welding operation generates one or more line or strip-shaped welding figure(s) on the fabric tube (1).

4. A method according to claim 1 or 2, **characterized in that** the welding process generates a plurality of punctiform welding figures on the fabric tube (1).

5. Method according to one of claims 1 to 4, **characterized in that** the cutting line region (6) measured away from the cutting line (8) has a width of at least 1 cm and preferably extends substantially over the entire circumference of the fabric tube (1).

6. Method according to one of claims 1 to 5, **characterized in that** the cutting line region (6) starting from the cutting line (8) comprises at least one to three fabric tape rows extending parallel to the cutting line (8) and preferably extending substantially over the entire circumference of the fabric tube (1).

7. Method according to one of claims 1 to 6, **characterized in that** the superposed fabric layers (13,14) of the fabric tube (1) are treated simultaneously by the welding operation.

8. Method according to one of claims 1 to 7, **characterized in that** the superposed fabric layers (13,14) of the fabric tube (1) are spaced from each other with the aid of separation means, in particular a separation layer, a separation liner or an internal tool (3), to prevent the joining of the superposed fabric layers (13,14).

9. Method according to one of claims 1 to 8, **characterized in that** the cutting line region (6) of a sack opening is treated by the welding operation and the other sack opening is closed, for example by sewing.

10. Method according to one of claims 1 to 9, **characterized in that** the fabric consists of monoaxially stretched polymer tapes, in particular polyolefin or polypropylene tapes.

11. Method according to one of claims 1 to 10, **characterized in that** a film is positioned in the interior of the fabric tube (1) before the welding operation and an edge of the film is connected with the tissue in the cutting line region (6) by means of the welding operation.

12. Method according to one of claims 1 to 11, **characterized in that** the cutting takes place after the welding operation and by cold cutting.

13. An apparatus for producing sacks (10) from a fabric tube (1), in particular for carrying out the method according to one of claims 1 to 12, comprising a tube unwinding or tube forming device, a cutting device, to which a flat fabric tube (1) coming from the tube unwinding or tube forming device can be fed in the longitudinal direction of the fabric tube (1) and from which tubular sack bodies (7) obtained by cutting the fabric tube (7) can be fed away, and comprising a sack closing device for closing at least one open end of the sack bodies (7), **characterized in that** the apparatus comprises at least one welding device for treating at least one cutting line (8) of the tubular sack bodies (7) by heat input, wherein the welding device and is arranged in front of the sack closing device, wherein the at least one welding device and the cutting device together form a unit or the at least one welding device is positioned before the cutting device when viewed in the transport direction of the fabric tube (1), and that separating means, in particular, a separating layer, a separating liner or an internal tool (3) are associated to the at least one welding device in order to create a distance between the superimposed fabric layers (13,14) of the fabric tube (1) during the welding operation.

14. Apparatus according to claim 13, **characterized in that** the at least one welding device is designed as an ultrasonic welding device.

15. Apparatus according to claim 14, **characterized in that** the internal separating means is designed as a vibration transmission means.

## Revendications

1. Procédé de fabrication de sacs (10) à partir d'un tube de tissu (1), pour lequel le tube de tissu plat (1) est acheminé depuis un dispositif de dévidage de tube ou d'un dispositif de formage de tube d'une installation de coupe dans laquelle le tube de tissu (1) est coupé à longueur le long d'une ligne de coupe (8) de manière que des corps de sac tubulaires (7) ouverts des deux côtés, dans lequel la coupe à longueur du tube de tissu (1) est effectuée dans une étape de transport longitudinal, dans laquelle le tube de tissu (1) ou les corps de sac tubulaires (7) sont transportés dans le sens longitudinal du tube de tissu (1), **caractérisé en ce qu'**une zone de ligne de coupe (6) du tissu est traitée sur au moins une extrémité ouverte des corps de sac tubulaires (7) avant la fermeture de cette extrémité ouverte par application de chaleur à l'aide d'un processus de soudage, dans lequel le processus de soudage est effectué temporellement avant la coupe à longueur ou simultanément à la coupe à longueur et est réalisé de sorte que seulement les petites bandes de tissu se croisant de la couche de tissu respective (13, 14) se relient les unes aux autres.

2. Procédé selon la revendication 1, **caractérisé en ce que** le processus de soudage est effectué par soudage aux ultrasons.

3. Procédé selon la revendication 1 ou 2, **caractérisé en ce que** le processus de soudage génère une ou plusieurs figure(s) de soudage en forme de ligne ou de bande sur le tube de tissu (1).

4. Procédé selon la revendication 1 ou 2, **caractérisé en ce que** le processus de soudage génère une pluralité de figures de soudage ponctuelles sur le tube de tissu (1).

5. Procédé selon l'une quelconque des revendications 1 à 4, **caractérisé en ce que** la zone de ligne de coupe (6) présente mesurée à partir de la ligne de coupe (8) une largeur d'au moins 1 cm et s'étend de préférence sensiblement sur la périphérie entière du tube de tissu (1).

6. Procédé selon l'une quelconque des revendications 1 à 5, **caractérisé en ce que** la zone de ligne de coupe (6) comporte à partir de la ligne de coupe (8) au moins une à trois rangées de petites bandes de tissu parallèles à la ligne de coupe (8) et s'étendant de préférence sensiblement sur la périphérie entière du tube de tissu (1).

7. Procédé selon l'une quelconque des revendications 1 à 6, **caractérisé en ce que** les couches de tissu (13, 14) se trouvant l'une sur l'autre du tube de tissu (1) sont traitées simultanément par le processus de soudage.

8. Procédé selon l'une quelconque des revendications 1 à 7, **caractérisé en ce que** les couches de tissu (13, 14) se trouvant l'une sur l'autre du tube de tissu (1) sont espacées les unes des autres à l'aide de moyens de séparation, en particulier d'une feuille de séparation, d'une couche de séparation ou d'un outil (3) intérieur, afin d'empêcher la liaison des couches de tissu (13, 14) reposant l'une sur l'autre.

9. Procédé selon l'une quelconque des revendications 1 à 8, **caractérisé en ce que** la zone de ligne de coupe (6) d'une ouverture de sac est traitée par le processus de soudage et l'autre ouverture de sac est fermée par exemple par couture.

10. Procédé selon l'une quelconque des revendications 1 à 9, **caractérisé en ce que** le tissu se compose de petites bandes de polymère étirées monoaxialement, en particulier de polyoléfine ou de polypropylène.

11. Procédé selon l'une quelconque des revendications 1 à 10, **caractérisé en ce qu'**un film est positionné avant le processus de soudage à l'intérieur du tube de tissu (1) et un bord du film est relié au tissu au moyen du processus de soudage dans la zone de ligne de coupe (6).

12. Procédé selon l'une quelconque des revendications 1 à 11, **caractérisé en ce que** la coupe à longueur est effectuée après le processus de soudage et au moyen de la découpe à froid.

13. Dispositif de fabrication de sacs (10) à partir d'un tube de tissu (1), en particulier pour la réalisation du procédé selon l'une quelconque des revendications 1 à 12, comprenant un dispositif de dévidage ou de formation de tube, un dispositif de coupe auquel peut être amené un tube de tissu (1) plat du dispositif de dévidage ou de formation de tube dans le sens longitudinal du tube de tissu (1) et à partir duquel des corps de sac (7) en forme de tube obtenus par coupe à longueur du tube de tissu (1) peuvent être séparés, et un dispositif de fermeture de sac pour la fermeture d'au moins une extrémité ouverte des corps de sac (7), **caractérisé en ce que** le dispositif comporte au moins un dispositif de soudage pour le traitement d'au moins une ligne de coupe (8) des corps de sac (7) en forme de tube par application de chaleur, dans lequel le dispositif de soudage est agencé avant le dispositif de fermeture de sac, dans lequel l'au moins un dispositif de soudage et le dispositif de coupe forment une unité ou l'au moins un dispositif de soudage est agencé dans le sens de transport du tube de tissu (1) avant le dispositif de coupe, et à l'au moins un dispositif de soudage sont associées des moyens de séparation, en particulier une feuille de séparation, une couche de séparation ou un outil (3) intérieur, pour l'espacement des couches de tissu (13, 14) se trouvant l'une sur l'autre du tube de tissu (1) pendant le processus de soudage.

14. Dispositif selon la revendication 13, **caractérisé en ce que** l'au moins un dispositif de soudage est réalisé en tant que dispositif de soudage aux ultrasons.

15. Dispositif selon la revendication 14, **caractérisé en ce que** le moyen de séparation intérieur est réalisé en tant que moyen de transmission d'oscillations.
